# EUROPEAN PATENT APPLICATION

(11) **EP 2 003 377 A2**
(43) Date of publication of application: **17.12.2008**
(21) Application number: 07739171.2
(22) Date of filing: 20.03.2007
(51) Int. Cl.: F16J 15/43

(54) **DEVICE FOR SEALING MAGNETIC FLUID**

(30) Priority: 31.03.2006 JP 2006098073
(71) Applicant: EAGLE INDUSTRY Co., Ltd., Tokyo 105-8587 (JP)
(72) Inventor: KOMINO, Mitsuaki, Minato-ku, Tokyo 105-8587 (JP); HONDA, Shigeki, Minato-ku, Tokyo 105-8587 (JP)
(74) Representative: Wiebusch, Manfred
(86) International application number: PCT/JP2007/055728
(87) International publication number: WO 2007/114051

(57) **Abstract**

The present invention provides a magnetic fluid seal device which enables to avoid the increase of the torque due to the aggregation of the solute of the magnetic fluid or the condition in which it is unable to start. According to the magnetic fluid seal device of the present invention, the hearer 151 is buried in the area where the magnetic fluid seal portion 140 is position inside the shaft 110. The torque meter 171 detects the rotation torque and the starting torque of the shaft 110, and when it is larger than the standard value, the magnetic fluid seal portion 140 is heated via the heater 151 inside the shaft 110. Thereby, the temperature of the magnetic fluid 146 and 147 rises, the solute of the magnetic fluid 146 and 147 is dispersed which lowers the viscosity thereof, and the rotation torque and the starting torque of the shaft 110 is lowered.

## Description

### TECHNICAL FIELD

The present invention relates to a magnetic fluid seal device suitable to transfer the movement from outside into a closed space such as chamber or clean room or so.

### BACKGROUND ART

For example, in a process for producing a semiconductor device, treatment such as oxidation, dispersion or CVD (chemical Vapor Deposition) or so to the semiconductor wafer are performed by holding the wafer in vacuo or in specific gas atmosphere. In many cases, the wafer is placed in a chamber or a container (hereinafter, referred to as a treating chamber), then it is treated by exposing to the atmosphere of the treating chamber by for example rotating or so. Therefore, a treating chamber used for such treatment is required to be highly air tight, as well as to be able to carry a mechanical movement into the treating chamber from outside of the chamber, such as rotation or so of the wafer. As a suitable means to carry the mechanical movement into the treating chamber under the condition in which the treating chamber is appropriately sealed, has been conventionally known as a magnetic fluid seal.

A magnetic fluid is a magnetic ultrafine particle with diameter of about 10nm dispersed in a solvent or in oil (base oil) using surfactant. Said magnetic fluid possesses a characteristic which moves along the magnetic line and trapped in the magnetic field. A magnetic fluid seal is a seal using this magnetic fluid in which the magnetic fluid act as a seal material by trapping the magnetic fluid in the magnetic field formed around the shaft or so using a magnet and a magnetic pole. The magnetic fluid seal is characterized by high in air tightness, low in dust generation, and low in friction loss torque. Thus, a seal device installed with magnetic fluid seal for the shaft is widely used as a device capable to incorporate the rotation movement with low torque in closed space such as in vacuo or so.

However, in such magnetic fluid seal device, there are cases that the solute such as ferric oxide or so which were maintained by dispersing in a surfactant aggregates after long term storage, long term termination , or when it was not rotated for a long time. Once the magnetic ultrafine particle as a solute aggregates, the viscosity of the magnetic fluid increases which results to generate an excessive restart torque (starting torque) when rotating the shaft or it may not be able to start.
As a method to make the viscosity of the magnetic fluid constant, for example, a device disclosed in Japanese Unexamined Publication 2000-205417 (reference 1) are known. In the device described in the reference 1, the magnetic fluid seal is equipped with a heater and a cold water circulation circuit. Thereby the temperature of the magnetic fluid is maintained in constant allowing the viscosity and the friction loss constant, and the accuracy of the rotation axis is prevented from declining.

However, in the conventional seal device which regulates the temperature of the magnetic fluid such as the device described in the reference one, the heater is placed outside of the magnetic fluid seal, therefore the distance between the heater and the magnetic fluid is long. Furthermore, the structural member such as the magnets and the magnetic pole materials (magnetism carrying material and assembly body) or so are placed between the heater and the magnetic fluids, thus the heat of the heater does not reach to the magnetic fluid seal effectively which makes it unable to appropriately heat the magnetic fluid. Moreover, in such constitution, most of the heat of the heater escapes to the atmosphere. Therefore, if one tries to transfer the heat of the heater in the direction of the magnetic fluid seal, it is necessary to insulate by placing the thermal insulating material outside of the heater, and also the constitution of the device became complicated. As a result, there are problems that the production of the excessive starting torque after the long term storage or long term stop, or a prevention of being unable to start cannot be prevented appropriately.

### DISCLOSURE OF THE INVENTION

### PROBLEM TO BE SOLVED BY THE INVENTION

The present invention was achieved reflecting above said situation, and the objective thereof is to provide a magnetic fluid seal device capable to prevent the production of the excessive starting torque even after a long term storage or a long term termination, and also capable to avoid the condition of being unable to start.

### MEANS FOR SOLVING PROBLEM

In order to solve the above said objective, the magnetic fluid seal device according to the present invention comprises, a shaft transferring the predetermined mechanical movement, a housing in which said shaft penetrates through, and a bearing part supporting said shaft to said housing. The magnetic fluid seal device according to the present invention is placed at the opening portion of the treating chamber which is maintained in a predetermined environment so as to cover the opening portion, said shaft is inserted into said treating chamber via said opening, and said mechanical movement is transferred into said treating chamber from out side of said treating chamber via said shaft. Said magnetic fluid seal device comprises a magnetic force generating means placed between said housing and said shaft which generates magnetic force around said shaft in the axis direction of the shaft, a magnetism transferring member each placed in an axial direction of the both sides of said shaft of said magnetic force generation means, and a magnetic fluid maintained in a tubular space between said shaft and said magnetism transferring member due to a magnetic flux generated by said magnetic force generating means to seal a near side and a far side of said treating chamber between said housing and said shaft. A heating means is buried at least near by said magnetic fluid within said shaft.

In such magnetic fluid seal device according to the present invention, the magnetic fluid is heated by the heating means buried in the shaft where the magnetic fluid contacts, thus the heating of the magnetic fluid can be done effectively. Generally, the dispersion of the solute in the solvent in the solute-solvent binary system, the solute is re-dispersed along with the temperature increase and the viscosity of the solvent decreases also along with the temperature increase. Therefore, the magnetic fluid seal device according to claim 1 of the present invention can effectively re-disperse the solute even when it is aggregated due to the long term storage and long term termination, and also it can prevent the production of the excessive starting torque at the starting. Moreover, it can provide a magnetic fluid seal device capable to avoid the condition being unable to start.

In the magnetic fluid seal device of the present invention, said heating means may be extended to said treating chamber at inside of said shaft.
According to the magnetic fluid seal device with such constitution, the magnetic fluid seal device near by the treating room can be maintained in a high temperature by heating with the heating means buried near the treating chamber, thus the side product produced by sublimation due to the low temperature of the treating chamber nearby the magnetic fluid seal device can be prevented.

Furthermore, the magnetic fluid seal device of the present invention can comprise, a torque detection means which detects the torque of said shaft, and a heat regulating means which regulates the heat of said heating means based on said torque being detected.
According to the magnetic fluid seal device with such constitution, because the heating means is regulated based on the torque value actually detected by the torque detecting means, it detects the excessive starting torque appropriately; and even under such condition, the heating by the heating means and the re-dispersion of solute of the magnetic fluid based thereon can be performed appropriately.
Furthermore, the viscosity of the magnetic fluid can be maintained in constant more accurately, and the shaft can be driven accurately.

As for the preferable example, said heating means in the magnetic fluid seal device of the present invention is a silicon rubber heater, a polyimide heater, a sheathed heater, a mica heater, or a composite heater of those.
According to the magnetic fluid seal device having such constitution, the heating means can be formed by an appropriate heater material which enables heat appropriately, and the re-dispersion of the solute of the magnetic fluid can be performed appropriately.

### BREIF DESCRIPTION OF DRAWINGS

[FIG.1] FIG.1 is a diagram illustrating the constitution of the preferable embodiment of the wafer processing device of the present invention.
[FIG.2] FIG. 2 is a diagram showing the constitution of the magnetic fluid seal device of the wafer processing device shown in the FIG.1.
[FIG.3] FIG.3 is a diagram showing a constitution of the controlling system of the heater of the magnetic fluid seal devie.
[FIG.4A] FIG.4A shows a relation between the temperature of the magnetic fluid seal portion and the rotation torque of the shat. That is, it shows a relation between the torque and the time to start when the magnetic fluid seal portion is at high temperature.
[FIG.4B] FIG.4B shows a relation between the temperature of the magnetic fluid seal portion and the rotation torque of the shat. That is, it shows a relation between the torque and the time for the activation when the magnetic fluid seal portion is at low temperature.

### BEST MODE FOR CARRYING OUT THE INVENTION

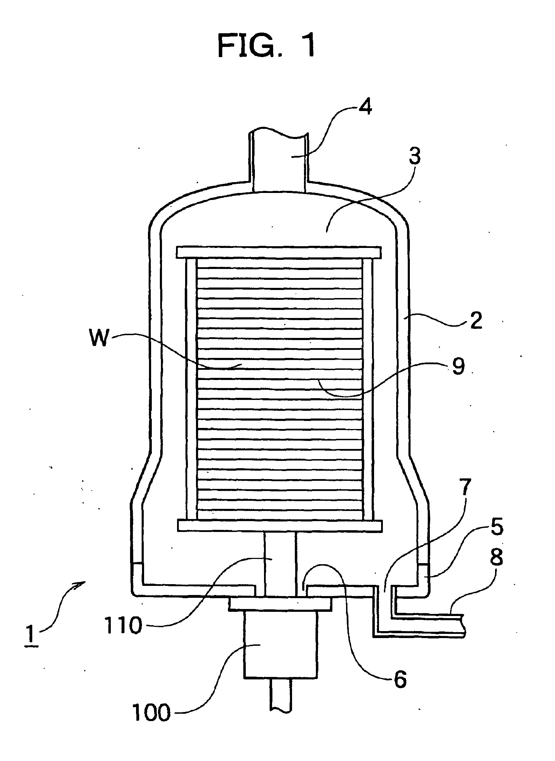

The embodiment of the present invention will be described using FIG.1 to FIG.4B.

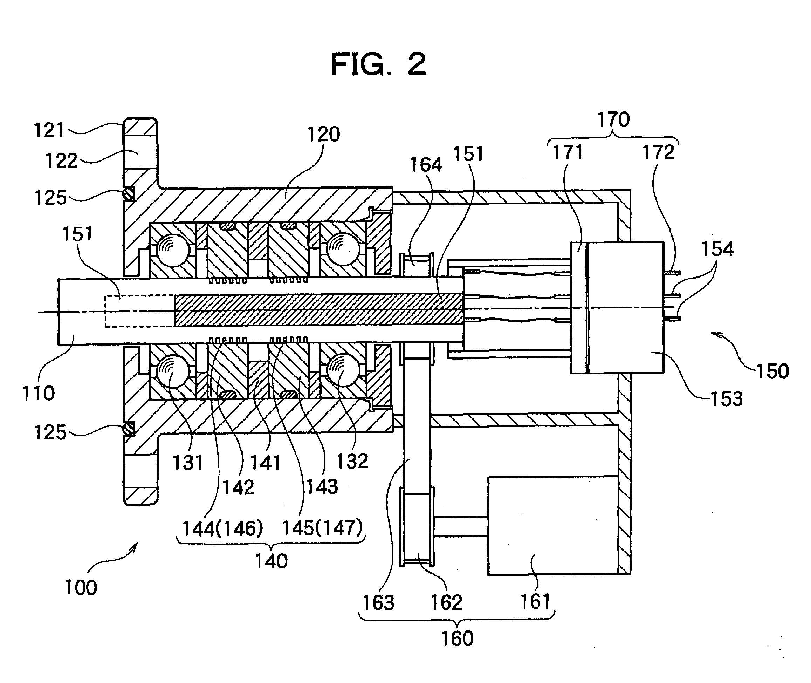

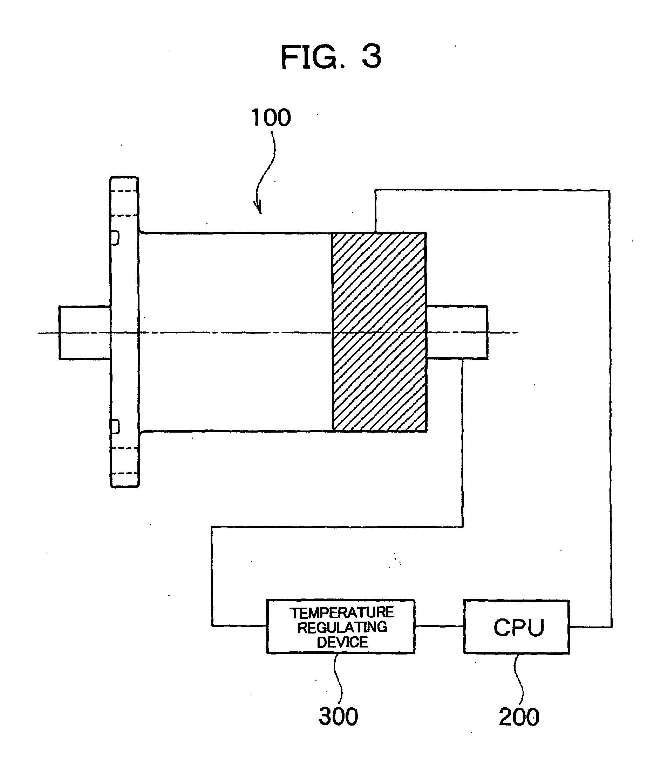

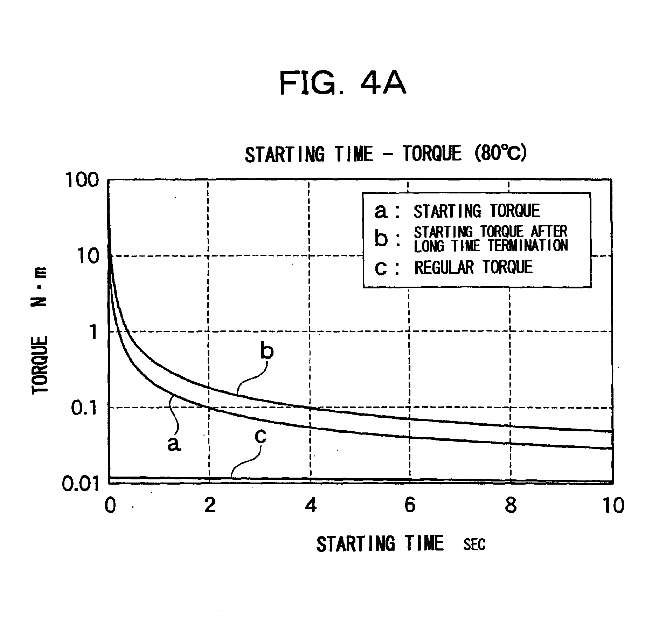

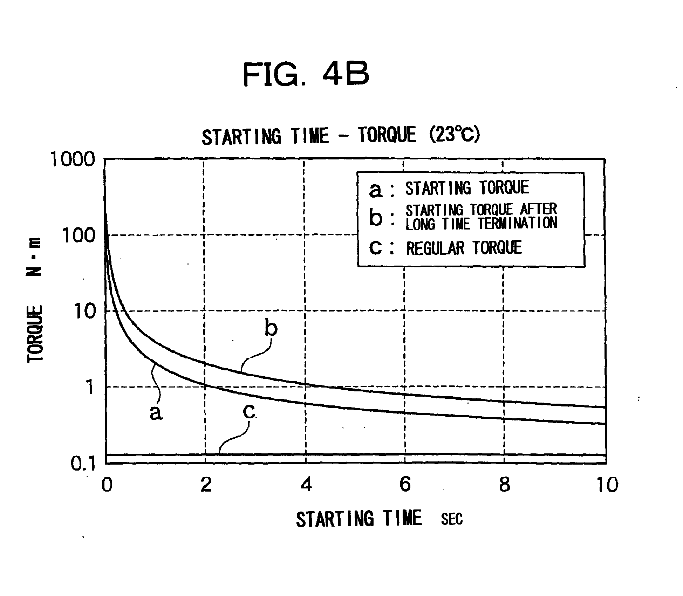

FIG.1 is a diagram schematically illustrating the constitution of the wafer processing device 1 as an embodiment of the present invention. FIG. 2 is a cross sectional diagram illustrating the constitution of the magnetic fluid seal device 100 applied in the wafer processing device 1. FIG.3 is a diagram illustrating the constitution of the controlling system of the heater of the magnetic fluid seal device 100. FIG.4A and FIG.4B illustrate the relation between the temperature of the magnetic fluid seal portion and the rotation torque of the shaft.

First, the whole constitution of the wafer processing device 1 will be explained using FIG.1.
As show in FIG.1, the wafer processing device 1 has a constitution wherein the board 9 is supported by shaft 110 of the magnetic fluid seal device contained in the inner container space 3 which is formed by the treating container 2 and base capping portion 5, wherein the desired processing are performed to the wafer W as a processing subject body on the board 9 by for example vacuuming the inner container space 3 via exhaust duct 8, or for example by supplying the desired reaction gas using supply duct 4 or so.

The treating container 2 is a container which stores several semiconductor wafer W and desired processing to the wafer W is performed by exposing into the reaction gas atmosphere or so. The treating container 2 is formed by silica glass comprising heat resistance and corrosion resistance. The present embodiment of the treating container 2, as shown in the diagram, has a top part formed in a dome shape (reverse funnel shape), and the bottom part is an opening portion (fire pit) . The board 9 is placed in the inner space 3 of the treating container 2. The board 9 is a wafer holding equipment made of silica which holds the 25 or so wafer W in vertical direction at predetermined interval in multiple stages.

At the lower end of the treating container 2, a bottom capping portion 5 which opens and closes the opening portion (fire pit) is arranged so as to be able to move up and down by elevator system which is not shown in the figure. The bottom capping portion 5 is a member made of silica.
At the center of the bottom capping portion 5, an opening portion 6 is formed to insert the shaft 110 of the magnetic fluid seal device 100 according to the present invention, which will be explained in the followings. The magnetic fluid seal device 100 closes the opening portion 6. Moreover, the magnetic fluid seal device 100 is placed at the bottom capping portion 5 so that the shaft 100 can be inserted into inner container space 3 via the opening portion 6.
The shaft 110 of the magnetic fluid seal device 100 inserted into the inner container space 3 via the opening portion 6 constitutes the column supporting the board 9. That is, the board 9 is supported to enable the rotation by the shaft 110.

At the center of the top part of the treating container 2, the supply duct 4 is connected which allows to supply the reaction gas (treating gas) into the inner container space 3. At the peripheral part of the bottom capping portion 5, an exhaust duct 8 is connected which allows to vacuum the inner container space 3 or to eject the gas in the inner container space 3. The exhaust duct 8 is connected to an ejecting system which is capable to reduce the pressure of the inside of the treating container 2 for example to tens of Pa to hundreds of Pa when the gases are introduced into the inner container space 3.

Also, though it is not shown in the figure, a tubular shape heater is placed around the treating container 2 capable of controlling the heating the inside of the treating container 2 for example at 300°C to 1200°C. For many device processes which are performed at the wafer processing device 1, the temperature inside the inner container space 3 is made high, and the desired processing is performed under that high temperature.

Next, the constitution of the magnetic fluid seal device 100 will be explained using FIG.2 and FIG.3.
The magnetic fluid seal device 100 carries the rotation movement to inner container space 3 from outside under the condition in which the inner container space 3 is completely sealed, that is the condition holding the inner container space 3 vacuum or filled with predetermined processing gas.
As shown in FIG.2, the magnetic fluid seal device 100 comprises a shaft 110, a housing 120, a bearing portion 131 and 132, a magnetic fluid seal portion 140, a heating portion 150, a rotation driving portion 160 and a torque detecting portion 170.
Also, as shown in FIG. 3, the magnetic fluid seal device is connected to controlling unit (CPU) 200 and the temperature regulating device 300. Thereby the viscosity of the magnetic fluid 146 and 147 of the magnetic fluid seal portion 140 which will be explained in the followings are made constant at desired low value. Thus, the shaft 110 is controlled so as to perform the desired rotation in good quality at low torque. Specifically, the heating portion 150 is controlled by controlling unit 200 and temperature regulating device 300, and thus the temperature of the shaft 110 and the temperature of the magnetic fluid seal portion 140 are controlled.

The shaft 110 is a member which becomes a rotational axis transmitting the rotation movement to inside from out side of the treating container 2. The shaft 110 is connected to rotation driving portion 160, which will be explained in the following, at the either one of the side end which becomes the exterior of the treating container, and thereby it is driven to rotate. Also, the other side end placed at the inner container space 3 is connected to the board 9, which supports the board 9 so as to enable the rotation. The shaft 110 is formed by the magnetic material.

As shown in FIG. 2, in the inside of the shaft 110, the heater 151 is buried from the end which is the exterior of the treating container until to the position of the treating container 2 side including the area constituting the magnetic fluid seal portion 140. The shaft 110 is heated if necessary with the heater 151. The area constituting the magnetic fluid seal portion 140 of the shaft 110 is made to desired high temperature by heating with the 151, thereby the re-dispersion of the solute of the magnetic fluid 146 and 147 of the magnetic fluid seal portion 140 is accelerated, and the viscosity of the magnetic fluid 146 and 147 is lowered. The constitution and the effect of the heating portion 150 will be explained later on.

The housing 120 is a tubular member where the shaft 110 penetrates through, and the flange 121 is placed at the end portion where the bottom capping 5 is equipped. The flange 121 is connected to the area around the opening portion 6 of the bottom capping portion 5 (refer to FIG.1); thereby the opening portion 6 of the bottom capping portion 5 is covered by the housing 120. The flange 121 is equipped with the opening portion 122 which allows the screws or so to go through to connect the housing 120 to the bottom capping portion 5. Also, an O ring 125 is placed at the contact surface between the housing 120 and the bottom capping portion 5. When the housing 120 is installed at the bottom capping portion 5, the housing 120 and the capping portion 5 is adhered by this O ring 125 and the space is sealed.

The each of bearing portion 131 and 132 are bearing which supports to enable the rotation of the shaft 110. The magnetic fluid seal device 100 of the present embodiment comprises, as shown in the figure, two bearings 131 and 132. These bearings are placed along both sides of the magnetic fluid seal portion 140 in the axial direction of the shaft 110. That is, one of the bearing 131 is placed on the treating container side of the magnetic fluid seal portion 140, and the other bearing 132 is placed on the exterior side (atmosphere side) of the treating container of the magnetic fluid seal portion 140.

The magnetic fluid seal portion 140 seals the container side of the inner opening portion of the housing 120 of the magnetic fluid seal device 100 and the exterior side thereof. The magnetic fluid seal portion 140 comprises; a magnet 141 as a magnetic force producing means, magnetic pole members 142 and 143 as a magnetic flux transferring member, ridged portions 144 and 145 as a magnetic pole portion on the shaft side and a magnetic fluid 146 and 147 as a sealing member.

The magnet 141 is a circular ring shaped magnet placed between the shaft 110 and the housing 120 which produces a magnetic field in the axial direction of the shaft 110.
The magnetic pole members 142 and 143 are circular ring shaped member made of magnetic material placed so as to contact with the magnet 141 in the both sides of the axial direction of the magnet 141. The outer circumference of the magnetic pole members 142 and 143 adheres to the inner circumference of the housing 120, and the inner circumference is constituted to form a slight space between the shaft 110 to be mounted on the housing 120 as such. The magnetic pole members 142 and 143 function as a magnetic pole by placing so that it is in contact with the magnet 141 as mentioned in above.
Also, multiple tubular grooves repeating in the circumferential direction are formed (groove portion) on the area opposing the inner circumference of the magnetic pole member 142 and 143 of the peripheral surface of the shaft 110 opposing. The tubular ridges portions placed in between said multiple grooves constitute the magnetic pole portions 144 and 145 of the shaft side.

Because the magnet 141, the magnetic pole members 142 and 143, the magnetic pole portions 144 and 145, and the magnetic fluids 146 and 147 are placed in such constitution, the magnetism circuit is formed which the magnetic flux runs through the magnet 141, magnetic pole members 142 and 143, the magnetic pole portions 144 and 145 of the shaft side, and the shaft 110. Furthermore, the magnetic flux of the magnetism circuit results to converges into the magnetic pole portions 144 and 145 of which is opposing the magnetic pole members 142 and 143, and thus the magnetic fluid 146 and 147 are maintained in this portion. That is, the sealing portion is formed by the magnetic fluid 146 and 147, similar to the form of insertion of the O ring along the circumference of the shaft 110. As a result, the exterior side and inside of the container sides of the housing 120 are sealed by the portion where the magnetic fluid 146 and 147 are placed.

The heating portion 150 is a means to heat the shaft 110 and to maintain at the desired high temperature.
The heating portion 150 comprises a heater 151, a slip ring (rotary connector) and an electricity supply terminal 154.
The heater 151 is buried in the area inside of the shaft 110 where the at least the magnetic fluid seal portion 140 of the axial direction of the shaft 110 is placed. The heater 151 of the present embodiment is buried continuously inside the shaft 110 from the exterior side of the treating container 2 of the shaft 110 till the position of the treating container 2 side, including the area where the magnetic fluid seal portion is constituted.

The heater 151 is connected to the lead cable at the terminal portion of the exterior side of the treating container 2 of the shaft 110, and furthermore it is connected to the electricity supply terminal 154 via the slip ring 153. The heater electricity supply terminal 154 is connected to, as shown in FIG. 3, the temperature controlling device 300 as a driving portion of the heating portion 150. Thereby, in the heating portion 150, the heater 151 heats up depending on the electricity supplied from the temperature controlling device 300, and heat the shaft 110. In the present embodiment, the heating portion 150 can heat the shaft 110 up to about 250°C.
Note that, the heater 151 is formed by silicon rubber heater, polyimide heater, sheathed heater, a mica heater, or a composite heater thereof.

The rotation driving portion 160 is a system driving the rotation of the shaft 110, and it comprises a driving motor 161, a driving side pulley 162, a timing belt 163 and a coupled driving side pulley 164.
The driving motor 161 is, for example, driven to rotate in a desired rotation speed based on the controlling signal from the controlling unit, not shown in the figure, which controls the whole wafer process of the wafer processing device 1. The rotation movement of this driving motor 161 is transferred to the driving side pulley 162, the timing belt 163 and the coupled driving pulley 164 via the shaft 110 and the shaft 110 is rotated in a desired rotation speed. Note that, the board 9 connected to the end side of the inner container space 3 of the shaft 110 also rotates due to the rotation of the shaft 110. As a result, the wafer W as processing subject placed on the board 9 of which stored in the inner container space 3 is exposed to the atmosphere of the inner container space 3 while rotating in a desired rotation speed.

The torque detecting portion 170 detects the rotation torque of the shaft 110 and for example it outputs to controlling porting (CPU) 200.
The torque detecting portion 170 comprises torque meter 171 and torque meter output terminal 172.
The torque meter 171 detects the rotation torque of the shaft 110. The signal of detection result is output from the torque meter output terminal 172 via lead cable and slip ring 153.

The controlling 200 show in FIG. 3 detects the condition of the magnetic fluid 146 and 147 of the magnetic fluid seal portion 140 based on the rotation torque of the shaft 110 detected by torque detecting portion 170; and controls the heating portion 150 via temperature controlling device 300 so that the condition of the magnetic fluid 146 and 147 of the magnetic fluid seal portion 140 are in a desired condition.
Specifically, the controlling unit 200 detects the viscosity of the magnetic fluid 146 and 147 and the condition of which the solute of the magnetic fluid 146 and 147 has been aggregated or not based on the rotation torque of the shaft 110 from the input of the torque detecting portion 170. Then, if the aggregation of the solute of the magnetic fluid 146 and 147 has occurred, or in case it determined that the viscosity of the magnetic fluid 146 and 147 has become high, in order to make the magnetic fluid 146 and 147 in a desired condition, the shaft 110 is heated via the temperature controlling device 300 and heating portion 150, raising the temperature of the shaft 110, raising the temperature of magnetic fluid 146 and 147 placed on the surface of the shaft 110 allowing to re-disperse the aggregated solute which makes the viscosity of the magnetic fluid to a desired condition.

The temperature controlling device 300 produces a signal for heating the heater 151 of the heating portion 150 in a desired degree of heating, and supplies to the heater 150 through the heater electricity supply terminal 154.

In the wafer processing device 1 having such constitution, in case performing some sort of treatment to the semiconductor wafer, the bottom capping portion 5 is separated and lowered from treating container 2 by an elevating means not shown in the figure, then the wafer W which is the subject of the processing is placed on the board 9 under that condition.
Once the wafer W is placed on the board 9, the bottom capping portion 5 is elevated to the position where it closes the lower opening portion of the treating container 2, and a closed inner container space 3 is formed.
Under this condition, for example, the inner container space 3 is vacuumed via the exhaust duct 8, and then the reaction gas is introduced into the inner container space 3 via the supply duct 4 to perform a desired process to the wafer W in the inner container space 3.
When performing the above process, the shaft 110 of the magnetic fluid seal device 100 is rotated if necessary, and the board 9 of the inner container space 3 is rotated. Then the treatment on the surface of the wafer W or a treatment to make the reaction uniform or so are performed.
Thereby the desired treatment to the wafer W is performed.

In the present invention, when performing such treatments, the rotation torque of the shaft 110 is detected by the torque meter 171, and the condition of the magnetic fluid seal portion 140 in the controlling unit 200 is estimated based on said rotation torque. That is, the condition of which the viscosity of the magnetic fluid 146 and 147 of the magnetic fluid seal portion 140 being higher than the desired value or the condition of the solute of the magnetic fluid 146 and 147 of the magnetic fluid seal portion 140 being aggregated due to the long term storage and long term termination are detected based on the rotation torque and the starting torque of the shaft 110.

Then, based on the result of above detection, the controlling unit 200 controls; the heating portion 150 via temperature regulating device 300 and the temperature of the shaft 110, that is the temperature of the magnetic fluid 146 and 147 of the magnetic fluid seal portion 140; and the magnetic fluid 146 and 147, and the rotation torque and the starting torque of the shaft 110 made in to a desired condition.
That is, when the viscosity of the magnetic fluid 146 and 147 has been detected to be too high, or when the aggregation of the solute thereof has been detected; the heater 151 is heated to the heating value corresponding to said detection level; and the temperature near the magnetic fluid seal portion 140 of the shaft 110 and the temperature of the magnetic fluid 146 and 147 are raised, so that the viscosity of the magnetic fluid 146 and 147 are lowered or the dispersion of the solute thereof is promoted.

As a result, even when the staring torque is high due to the aggregation of solute of the magnetic fluid 146 and 147 after the long term storage or long term termination, the re-dispersion of the solute can be promoted promptly which enables to lower the starting torque of the shaft 110 to the desired value effectively. Therefore, it prevents the occurrence of the condition of a high starting torque that is the condition in which the shaft 110 has to rotate when the load is large, or the condition in which the load is too large that the shaft 110 cannot be driven.

Referring to the example shown in Fig.4A and 4B, the lowering the starting torque of the shaft 110 by raising the temperature of the magnetic fluid seal portion 140 will be explained.
Fig.4A and 4B illustrates the starting torque of the magnetic fluid seal portion 140 at each temperature, and the starting torque and regular torque after the long term termination. Fig.4A shows the relationship between the starting time and the torque when the magnetic fluid seal portion 140 is at high temperature, which is 80 degree. Fig. 4B shows the relationship between the starting time and the torque when the magnetic fluid seal portion 140 is at low temperature (room temperature), which is 23 degree.

Compared to the torque a at the normal starting, the torque b at starting after long term termination, and the torque when the magnetic fluid seal portion 140 is at low temperature (room temperature) as shown in Fig. 4B, it can be seen that the value is lowered to one tenth when the magnetic fluid seal portion 140 shown in Fig.4A is at a high temperature.
Also, when the magnetic fluid seal portion 140 is at high temperature or low temperature (room temperature), in either case, the starting torque after the long term termination is higher compared to the normal starting torque. Especially, it can be seen that the torque is nearly ten times higher immediately after the start.

According to these figures, even when the starting of the magnetic fluid seal device 100 required excessively large starting torque as the starting torque b which is after the long term termination, the torque characteristics thereof becomes as shown in Fig.4A, allowing the value of the same torque b which is the torque after long term termination to lower to one tenth of what is was by heating the magnetic fluid seal portion 140 into high temperature. Furthermore, said value is close to the normal starting torque at low temperature (room temperature) as shown in Fig.4B. Thus, it enables to start the shaft 110 even after the long term termination , by heating the magnetic fluid seal portion 140 to high temperature, the starting torque of the shaft 110 becomes equivalent to the normal starting torque when the magnetic fluid seal device is at low temperature (room temperature).

Moreover, the magnetic fluid seal device 100 of the present embodiment regularly detects the rotation torque of the shaft 110 and controls the condition of the magnetic fluid 146 and 147 even when it is not in a special condition as described in the above, thus the rotation driving portion 160 can always drive the shaft 110 in constant torque. As a result, the rotation (the rotation speed and the rotation angle or so) of the shaft 110 can be controlled very accurately.

Also, the wafer processing device 1 of the present embodiment places the heater 151 inside of the shaft 110 where the magnetic fluid 146 and 147 contact, thus the magnetic fluid 146 and 147 are heated efficiently by the heater 151 to control the temperature thereof. Therefore, even when the solute of the magnetic fluid 146 and 147 aggregates, it can be dispersed promptly. That is, the condition in which the starting torque of the shaft 110 being high is resolved, and the shaft 110 can be rotated. Thus, compared to the conventional constitution in which the magnetic fluid seal portion 140 is heated from out side of the magnetic fluid seal device 100, the heating amount can be made less, and also the response time can be made faster dramatically.

As explained in the above, according to the magnetic fluid seal device 100 of the wafer processing device 1 of the present embodiment, the generation of the excessive torque or the condition in which the shaft 110 being unable to rotate due to the aggregation of the solute of the magnetic fluid 146 and 147 after the long term storage and long term termination can be prevented.
Also, because the torque of the shaft 110 can be monitored constantly, the electric conductance to the heating portion 150 can be controlled accordingly, thereby the rotation torque of the shaft 110 can be maintained to a constant value, which allows to attain even more reliable magnetic fluid seal device 100.

Note that the above said embodiment has been described to understand the present invention easily, and thus the present invention should not be limited to said embodiment. Each and every element disclosed in the present embodiment includes all design modifications and equivalents belonging to technical range of the present invention, and the various arbitrary suitable modifications are possible.

For example, in the above said embodiment, the heater 151 is buried from the side portion of the outer side of the treating container 2 of the shaft 110 to the nearby area of the magnetic fluid seal portion 140. However, the heater 151 can be buried to the area where the shaft 110 passes through the flange 121, that is to the area 152 shown in broken line in Fig.2. Such constitution is suitable since the temperature around 121 can be controlled to a desired temperature through shaft 110.
Generally speaking, in the wafer processing device 1, the opening portion 6 where the magnetic fluid seal device 100 is placed or the area near the exhaust opening 7 tends to have lower temperature. In such cases, for example by-products based on the reaction gases or so of the inner container space 3 are highly possible to be generated by sublimation at such low temperature area. Such by-product is not favorable since it has negative effect to the wafer processing inside the inner container space 3, it may seal the exhaust opening 7, or it may adhered to space between the shaft 110 and the housing 120, in the worst case, the rotation of the shaft may stop.

On the contrary to this, the temperature around the opening 6 where the magnetic fluid seal 100 is placed can be prevented from becoming lower by extending the heater 151 of the shaft 110 to the area 152 where the shaft 110 passes trough the flange 120. As a result, the condition of which generates the by-product by sublimation in the inner container space 3 around said area can be prevented.

Also, in the above described embodiment, the temperature of the shaft 110, the housing 120, or the magnetic fluid seal portion 140 or so were controlled by the heating of the heater 151 of which is buried inside the shaft 110. However, the method to control the temperature is not limited to this. Addition to burying the heater in the shaft 110, the water passage or so was formed in which the cooling water runs through the desired portion and the area of the magnetic fluid seal device 100, and the cooling water can run through to cool the portion and area thereof. By taking such constitution, even when lowering the temperature, the temperature can be actively controlled, allowing to control the temperature more precisely and appropriately. Moreover the viscosity of the magnetic fluid 146 and 147, and also the rotation torque and the starting torque or so of the shaft 110 relating thereto can be controlled to be at a desired condition more precisely and appropriately.

Also, the magnetic fluid seal device 100 of the said embodiment was placed with bearing 131 and 132 at both sides in the axial direction of shaft of the magnetic fluid seal portion 140, which is a so called center impeller type magnetic fluid seal device. However, the position of the bearing portion is not limited to this, and for example, it may be placed at the far side from the treating container 2 of the magnetic fluid seal portion 140, which is a so called cantilever type magnetic fluid seal.

Furthermore, said embodiment was a constitution comprising only one magnetic fluid seal portion 140. However, it may be a constitution comprising a multiple levels of magnetic fluid seal portion equipped with plurality of magnetic fluid seal portion 140. Such constitution is favorable because the seal pressure resistance is increased.

### INDUSTRIAL APPLICABILITY

The present invention allows controlling the temperature of the magnetic fluid seal portion easier and efficiently by burying the heater into the shaft of the magnetic fluid seal device. For example, the present invention relates to a useful magnetic fluid seal device which enables to promptly re-disperse the aggregated solute of the magnetic fluid after long term storage or long term termination of the magnetic fluid seal device, and allows avoiding the condition in which the starting torque being too large or being unable to start the shaft.

## Claims

1. A magnetic fluid seal device comprising;
a shaft transmitting a predetermined mechanical movement,
a housing supporting said shaft, and
a bearing portion supporting said shaft to said housing; wherein
said magnetic fluid seal device is placed at an opening portion of a treating chamber maintained in a predetermined environment so as to close said opening portion,
said shaft is inserted into said treating chamber via said opening portion,
said mechanical movement is transmitted to said treating chamber from outside of said treating chamber through said shaft;
said magnetic fluid seal device comprising;
a magnetic force generation means placed between said housing and said shaft to generate magnetic force around said shaft in an axial direction of said shaft,
a magnetism transferring member each placed in an axial direction of the both sides of said magnetic force generation means along said shaft,
a magnetic fluid maintained in a tubular space between said shaft and said magnetism transferring member due to a magnetic flux generated by said magnetic force generating means to seal a near side and a far side of said treating chamber between said housing and said shaft; and
a heating means buried at least near said magnetic fluid inside said shaft.

2. The magnetic fluid seal device as set forth in claim 1, wherein said heating means extends towards near said treating chamber inside of said shaft.

3. The magnetic fluid seal device as set forth in claim 1 or 2 further comprising;
a torque detection means to detect a torque of said shaft, and
a heat regulating means to regulate the heating of said heating means based on said torque being detected.

4. The magnetic fluid seal device as set forth in any one of claims 1 to 3, wherein said heating means is a silicon rubber heater, a polyimide heater, a sheathed heater, a mica heater, or a composite heater thereof.
